# EUROPÄISCHE PATENTSCHRIFT

(11) **EP 0 884 335 B1**
(45) Veröffentlichungstag und Bekanntmachung des Hinweises auf die Patenterteilung: **14.04.2004**
(21) Anmeldenummer: 98109496.4
(22) Anmeldetag: 26.05.1998
(51) Int. Cl.: C08F 255/00, C08L 23/04, C08L 23/10

(54) **Segmentierte Polyolefine**
Segmented polyolefines
Polyoléfines segmentées

(30) Priorität: 10.06.1997 DE 19724317
(43) Veröffentlichungstag der Anmeldung: 16.12.1998
(73) Patentinhaber: Borealis GmbH, 2323 Schwechat-Mannswörth (AT)
(72) Erfinder: Rätzsch, Manfred, Prof. Dr., 4202 Kirchschlag (AT); Bucka, Hartmut, Dipl.-Ing., 4622 Eggendorf 125 (AT); Hesse, Achim, Dr., 4021 Linz (AT); Reichelt, Norbert, Dr., 4501 Neuhofen (AT)
(74) Vertreter: VA TECH Patente GmbH & Co

(56) Entgegenhaltungen:
- EP-A- 0 461 881
- EP-A- 0 601 682
- DD-A- 135 621
- DE-C- 19 607 430
- US-A- 5 374 686

## Beschreibung

Die Erfindung betrifft segmentierte Polyolefine, die zur Herstellung von Halbzeugen und Formstoffen mit hoher Festigkeit und Zähigkeit eingesetzt werden.

Olefin-Homopolymere wie Polyethylen, Polypropylen, Polybuten-1 und Poly-4-methylpenten besitzen auf Grund des flexiblen Kettenaufbaus ein moderates Festigkeitsniveau bei guten Zähigkeitseigenschaften. Der Aufbau aus apolaren Kettensegmenten hat zur Folge, daß Polyolefine ungenügend benetzbar sind und eine Lackierung oder Bedruckung besondere Maßnahmen erfordert.

Bekannte Verfahren zur Erhöhung des Festigkeitsniveaus von Polyolefinen sind die Verstärkung von Polyolefinen durch Glasfasern [Carlson,L., Composite Materials Series, Vol.7, Thermoplastic Composite Materials, Elsevier, New York 1991], die Herstellung von Polyolefinblends oder Polyolefinlegierungen mit Polymeren, die einen höheren Modul besitzen, wie Polyamid [Mühlhaupt, R., Kunststoffe 84(1994)9, 1153- 1158 ] oder Polystyren [ Modern Plastics International (1996)4, 93], der Einbau von sperrigen Cycloolefin-Kettenbausteinen in die flexiblen Polyolefinketten durch Copolymerisation [Cherdron, H., Angew. Makromol. Chem. 223(1994), 121-133] oder die Erhöhung des Ordnungsgrades durch Einsatz von Metallocenkatalysatoren [Mühlhaupt, R., Gummi-Asbest-Kunststoffe 49(1996)5, 394-403].

Diese bekannten Verfahren zur Erhöhung des Festigkeitsniveaus von Polyolefinen sind stets mit einem Abfall der Zähigkeitseigenschaften verbunden, so daß zur Erreichung eines ausgewogenen Eigenschaftsniveaus Elastomere wie Säuremodifizierte Styren - Ethylen - Buten - Blockcopolymere zugesetzt werden müssen [ Holsti-Miettinen, R., Polymer Engineering and Science 34(1994)5, 395-404].

Bekannte Verfahren zur Verbesserung der Zähigkeitseigenschaften von Polyolefinen sind der Zusatz von Elastomeren wie von Ethylen-Propylen- Elastomeren zur Erhöhung der Zähigkeit von Polypropylen [Karger-Kocsis, Polypropylene, Structure, blends and composites, Bd.2, S.103-125, Chapman and Hall, London 1995] oder der Zusatz von teilvernetzten Ethylen-Propylen-Dien-Elastomeren zur Erhöhung der Zähigkeit von Poly-4-methylpenten-1 [ EP 0 376 213]. Dieser Elastomerzusatz zur Erhöhung der Zähigkeitseigenschaften ist jedoch mit einem Abfall der Festigkeit der Polyolefin-Blends bzw. Polyolefinlegierungen verbunden.

Bekannte Verfahren zur Verbesserung der Benetzbarkeit von Polyolefinen sind die Beflammung und die Plasmabehandlung [ Gruner, Ch., Kunststoffe 82[1992]9, 802-806] sowie die Pfropfung mit hydrophilen ungesättigten Monomeren wie Acrylsäure oder Maleinsäureanhydrid [ Bazkin, A., J.Colloid Interface Sci. 43(1973)2, 475-483; Lavielle, L., Macromol.Symp. 23(1989), 343-353].

Die Umsetzung von Polyolefinen mit ungesättigten Monomeren in Gegenwart thermisch zerfallender Radikalbildner in fester Phase ( EP 0 138 224), in der Schmelze (EP 0 494 655), in Lösung [Wang, Y., J. appl. Polymer Sci. 52(1994), 1411-1417] sowie in disperser Phase ( JP 06 136 070) unter Bildung von Pfropfcopolymeren ist bekannt. Bekannt ist weiterhin, bei der Pfropfung Mischungen von ungesättigten Monomeren einzusetzen (US 53 44 886) oder die Pfropfung in fester Phase und nachfolgend in der Schmelze durchzuführen (EP 0 461 881).

Bekannte Haupteinsatzgebiete von Polyolefin-Pfropfcopolymeren sind Polyolefinrezepturen verbesserter Bedruckbarkeit, Lackierbarkeit und Haftung auf metallischen Substraten [Lavielle, L., Macromol.Symp. 23(1989), 343-353] sowie Kompatibilisatoren für Polyolefinblends mit nichtverträglichen Polymerkomponenten [Folkes, M., Polymer Blends and Alloys, 53-63, Blackie Academic&Professional London 1993].

Ziel der Erfindung bilden Polyolefine mit hoher Festigkeit und Zähigkeit, die die bestehenden Nachteile bekannter Polyolefinrezepturen vermeiden und zur Herstellung von Halbzeugen und Formstoffen geeignet sind.

Die erfinderische Aufgabe wurde durch segmentierte Polyolefine gelöst, die durch Umsetzung von Mischungen aus 80 bis 99 Masse% Polyolefinpulvern mit einer Korngröße im Bereich von 0,001 bis 2 mm und 20 bis 1 Masse% Polyolefingranulaten mit einer Korngröße im Bereich von 3 bis 6 mm mit ungesättigten Monomeren in kontinuierlichen Mischern in drei konsekutiven Reaktionsschritten in fester Phase und in einer Übergangsphase Festphase/Schmelze hergestellt worden sind.

Die eingesetzten Polyolefinpulver bestehen aus Propylen-Homopolymeren und/oder Copolymeren aus Propylen und α-Olefinen mit 2 bis 18 C-Atomen, insbesondere aus statistischen Propylen-Copolymeren, Propylen-Blockcopolymeren, statistischen Propylen-Blockcopolymeren und/oder elastomeren Polypropylenen; Ethylenpolymeren, bevorzugt aus unter Einsatz von Ziegler-Natta-Katalysatoren oder Metallocenkatalysatoren hergestellten Ethylenpolymeren, Polybuten-1, Poly-4-methylpenten-1, Mischungen der genannten Polyolefine sowie aus Mischungen dieser Polyolefinpulver, wobei die Polyolefinpulver mit einer Korngröße im Bereich von 0,001 bis 2 mm, bevorzugt bei 0,05 bis 0,5 mm vorliegen. Von besonderem Vorteil ist es; direkt aus dem Polymerisationsreaktor ausgetragene Polyolefinpulver einzusetzen.

Die eingesetzten Polyolefingranulate bestehen aus Ethylenpolymeren, bevorzugt aus Ethylenpolymeren, die unter Anwendung radikalischer Initiatoren oder unter Anwendung von Ziegler-Natta-Katalysatoren bzw. Metallocenkatalysatoren hergestellt werden, Ethylen-Propylen-Copolymeren, Copolymeren aus Ethylen und α-Olefinen mit 4 bis 18 C-Atomen, Ethylen-Propylen-Dien-Terpolymeren, Ethylen-Butadien-Styren-Terpolymeren, Propylen-Blockcopolymeren, Mischungen dieser Polyolefine oder aus Mischungen dieser Polyolefingranulate, wobei der Partikeldurchmesser der Granulatpartikel 3 bis 6 mm beträgt.

Bei der Herstellung der segmentierten Polyolefine ist im ersten Reaktionsschritt in fester Phase eine Umsetzung der Mischungen aus Polyolefinpulvern und Polyolefingranulaten bei Reaktionstemperaturen von 100°C bis 40°C unterhalb der Schmelztemperatur bzw. der Erweichungstemperatur der Polyolefine mit 5 bis 30 Masse%, bezogen auf die eingesetzten Polyolefine, Acrylsäure, Acrylnitril, Acrylsäure-C₁-C₁₈-alkyl-estern Methacrylsäure; Methacrylnitril, Methacrylsäure-C₁-C₁₈-alkyl-estern, Styren, Mono-C₁-C₁₂-alkyl-styrenen; Di - C₁-C₆-alkyl - styrenen, C₁-C₁₂-Alkoxy-styrenen, Monohalogenstyrenen, Styrencarbonsäure - C₁-C₁₁-alkylestern und/oder C₄-C₂₁-Dicarbonsäureanhydriden in Gegenwart von 0,05 bis 0,85 Masse%, bezogen auf die eingesetzten Polyolefine, an Acylperoxiden, Alkylperoxiden, Hydroperoxiden, Peroxycarbonaten und/oder Perestem erfolgt.

Beispiele für die bei der Herstellung der segmentierten Polyolefine als Monomere eingesetzten Acrylsäure-C₁-C₁₈-alkyl-ester sind Methylacrylat, Ethylacrylat, tert.Butylacrylat, Ethylhexylacrylat, Benzylacrylat und Stearylacrylat.

Beispiele für die bei der Herstellung der segmentierten Polyolefine als Monomere eingesetzten Methacrylsäure-C₁-C₁₈-alkyl-ester sind Methylmethacrylat, Ethylmethacrylat, tert.Butylmethacrylat, Ethylhexylmethacrylat, Benzylmethacrylat und Stearylmethacrylat.

Beispiele für die bei der Herstellung der segmentierten Polyolefine als Monomere eingesetzten Styrenderivate Mono-C₁-C₁₂-alkyl-styrene, Di - C₁-C₆-alkyl - styrene, C₁-C₁₂-Alkoxy-styrene, Monohalogenstyrene und Styrencarbonsäure - C₁-C₁₁-alkylester sind α-Methylstyren, Dimethylstyren, Methoxystyren, Chlorstyren und Styrencarbonsäureethylhexylester.

Beispiele für die bei der Herstellung der segmentierten Polyolefine im ersten Reaktionsschritt eingesetzten ungesättigten C₄-C₂₁-Dicarbonsäureanhydride sind Maleinsäureanhydrid, Fumarsäureanhydrid, Itakonsäureanhydrid und/oder Norbornendicarbonsäureanhydrid.

Beispiele für die bei der Herstellung der segmentierten Polyolefine im ersten Reaktionsschritt eingesetzten Acylperoxide sind Acetylbenzoylperoxid, Benzoylperoxid, 4-Chlorbenzoylperoxid, Dinitrobenzoylperoxid, 3-Methoxybenzoylperoxid und Methylbenzoylperoxid.

Beispiele für die bei der Herstellung der segmentierten Polyolefine im ersten Reaktionsschritt eingesetzten Alkylperoxide sind Allyl-tert.butylperoxid, 2,2-Bis-(tert.butylperoxybutan), 1,1-Bis-(tert.butylperoxi-)-3,3,5-trimethylcyclohexan, Diisopropylaminomethyl-tert.amylperoxid, Dimethylaminomethyl-tert.amylperoxid, Diethylaminomethyl-tert.butylperoxid, Dimethylaminomethyl-tert.butylperoxid, 1.1-Di-(tert. amylperoxi)cyclohexan, tert. Amylperoxid, tert.Butylcumylperoxid, tert.Butylperoxid und 1-Hydroxybutyl-n-butylperoxid.

Beispiele für die bei der Herstellung der segmentierten Polyolefine im ersten Reaktionsschritt eingesetzten Hydroperoxide sind Decalinhydroperoxid und Tetralinhydroperoxid.

Beispiele für die bei der Herstellung der segmentierten Polyolefine im ersten Reaktionsschritt eingesetzten Perester und Peroxicarbonate sind Butylperacetat, Cumylperacetat, Cumylperpropionat, Cyclohexylperacetat, Di-tert.butylperadipat, Ditert.butylperazelat, Di-tert.butylperglutarat, Di-tert.butylperphthalat, Di-tert.butylpersebazat, 4-Nitrocumylperpropionat, 1-Phenylethylperbenzoat, Phenylethylnitroperbenzoat, tert.Butyl-bicyclo-(2,2,1)heptanpercarboxylat, tert.Butyl-4-carbomethoxyperbutyrat, tert.Butyl-cyclobutanpercarboxylat, tert.Butylcyclohexylperoxycarboxylat, tert.Butylcyclopentylpercarboxylat, tert.Butylcyclopropanpercarboxylat, tert.Butyldimethylpercinnamat, tert.Butyl-2-(2,2-diphenylvinyl)perbenzoat, tert.Butyl-4-methoxyperbenzoat, tert. Butylperbenzoat, tert.Butylcarboxicyclohexan, tert.Butylpernaphthoat, tert.Butylperoxiisopropylcarbonat, tert.Butylpertoluat, tert. Butyl-1-phenylcyclopropylpercarboxylat, tert.Butyl-2-propylperpenten-2-oat, tert.Butyl-1-methylcypropylpercarboxylat, tert.Butyl-4-nitrophenylperacetat, tert.Butylnitrophenylperoxycarbamat, tert. Butyl-N-succinimidopercarboxylat, tert. Butylpercrotonat, tert.

Butylpermaleinsäure, tert.Butylpermethacrylat, tert.Butylperocoat, tert.Butylperoxyisopropylcarbonat, tert.Butylperisobutyrat, tert.Butylperacrylat und tert.Butylperproprionat.

Mit besonderem Vorteil werden im ersten Reaktionsschritt Gemische dieser Radikalbildner eingesetzt, um im zweiten und dritten Reaktionsschritt eine hinreichende Konzentration an thermisch nicht bereits zerfallenen Radikalbildnern zur Verfügung zu haben.

Der besondere Vorteil des Einsatzes der unterschiedlichen Polyolefinkomponenten in Pulverform und in Granulatform besteht darin, dass auf Grund der unterschiedlichen Diffusionskinetik der eingesetzten Monomeren und Peroxide die Konzentration in den Partikeln durch den Partikeldurchmesser gesteuert werden kann.

Bei der Herstellung der segmentierten Polyolefine ist im zweiten Reaktionsschritt in fester Phase bei Reaktionstemperaturen von 60 °C bis 20 °C unterhalb der Schmelztemperatur bzw. der Erweichungstemperatur der Polyolefine eine Umsetzung der im ersten Reaktionsschritt modifizierten Polyolefine mit 0,5 bis 20 Masse%, bezogen auf die eingesetzten Polyolefine, Acrylnitril, Methacrylnitril, Methylacrylsäure-C₁-C₁₈-alkylestern, Styren, Mono-C₁-C₁₂-alkyl-styrenen; Di-C₁-C₈-alkyl-styrenen, C₁-C₁₂-Alkoxystyrenen, Monohalogenstyrenen, Styrencarbonsäure-C₁-C₁₁-alkylestern, C₅-C₁₄-Vinylsilanen, C₆-C₁₅-Acrylatsilanen, Vinylpyridin, Vinyloxazolin, Isopropenyloxazolin, Vinylpyrrolidon, Amino-C₁-C₈-alkyl-acrylaten, Amino-C₁-C₈-alkyl-methacrylaten, C₃-C₃-C₂₀-Vinylethern, Hydroxy-C₁-C₈-alkyl-acrylaten, Hydroxy-C₁-C₈-alkyl-methacrylaten und gegebenenfalls mit 0,1 bis 5 Masse%, bezogen auf die eingesetzten Polyolefine, Divinylbenzen, Allylacrylat, Allylmethacrylat, Acrylsäureestern von C₂-C₈-Diolen, Methacrylsäureestern von C₂-C₈-Diolen, C₁₂-C₁₇-Acrylsäureester von Polyalkoholen und/oder C₁₅-C₂₁-Methacrylsäureester von Polyalkoholen erfolgt.

Beispiele für die bei der Herstellung der segmentierten Polyolefine im zweiten Reaktionsschritt eingesetzten C₅-C₁₄-Vinylsilane sind Vinyltriethoxysilan, Vinyltriisopropoxysilan, Vinyltrimethoxysilan und Aminoethyldiethoxyvinylsilan.

Beispiele für die bei der Herstellung der segmentierten Polyolefine im zweiten Reaktionsschritt eingesetzten C₆-C₁₅-Acrylatsilane sind Methacryloxypropyltrimethoxysilan, Methacryloxypropyldimethylethoxysilan, Methacryloxypropylmethyldiethoxysilan, Methacryloxypropyltriethoxysilan und Methacryloxypropyltrimethoxysilan.

Beispiele für die bei der Herstellung der segmentierten Polyolefine im zweiten Reaktionsschritt eingesetzten Amino-C₁-C₈-alkyl-acrylate sind Aminoethylacrylat, Aminoisobutylacrylat und Aminoethylhexylacrylat.

Beispiele für die bei der Herstellung der segmentierten Polyolefine im zweiten Reaktionsschritt eingesetzten Amino-C₁-C₈-alkyl-methacrylate sind Aminoethylmethacrylat, Aminoisobutylmethacrylat und Aminoethylhexylmethacrylat.

Beispiele für die bei der Herstellung der segmentierten Polyolefine im zweiten Reaktionsschritt eingesetzten C₃-C₂₀-Vinylether sind Vinylmethylether, Vinylisobutylether, Hydroxyethylvinylether, Hydroxybutylvinylether und Vinylstearylether.

Beispiele für die bei der Herstellung der segmentierten Polyolefine im zweiten Reaktionsschritt eingesetzten Hydroxy-C₁-C₈-alkyl-acrylate sind Hydroxyethylacrylat, Hydroxyisobutylacrylat und Hydroxyethylhexylacrylat.

Beispiele für die bei der Herstellung der segmentierten Polyolefine im zweiten Reaktionsschritt eingesetzten Hydroxy-C₁-C₈-alkyl-methacrylate sind Hydroxyethylmethacrylat, Hydroxyisobutylmethacrylat und Hydroxyethylhexylmethacrylat.

Beispiele für die bei der Herstellung der segmentierten Polyolefine im zweiten Reaktionsschritt eingesetzten Diacrylsäureester von C₂-C₈-Diolen sind Ethylenglycoldiacrylat, Butylenglycoldiacrylat, Pentandioldiacrylat, Trimethylenglycoldiacrylat und Hexandioldiacrylat.

Beispiele für die bei der Herstellung der segmentierten Polyolefine im zweiten Reaktionsschritt eingesetzten Dimethacrylsäureester von C₂-C₇-Diolen sind Ethylenglycoldimethacrylat, Butylenglycoldimethyacrylat, Pentandioldimethacrylat und Trimethylenglycoldimethacrylat.

Beispiele für die bei der Herstellung der segmentierten Polyolefine im zweiten Reaktionsschritt eingesetzten C₁₂-C₁₇-Acrylsäureester von Polyalkoholen sind Glycerintriacrylat, Trimethylolpropantriacrylat und Pentaerythrittetraacrylat.

Beispiele für die bei der Herstellung der segmentierten Polyolefine im zweiten Reaktionsschritt eingesetzten C₁₅-C₂₁-Methacrylsäureester von Polyalkoholen sind Glycerintrimethacrylat, Trimethylolpropantrimethacrylat und Pentaerythrittetramethacrylat.

Bei der Herstellung der segmentierten Polyolefine ist im dritten Reaktionsschritt in einer Übergangsphase Festphase/Schmelze bei Reaktionstemperaturen von 40 °C unterhalb der Schmelztemperatur bzw. der Erweichungstemperatur der Polyolefine bis 40 °C oberhalb der Schmelztemperatur bzw. der Erweichungstemperatur der Polyolefine eine Umsetzung der im ersten und nachfolgend zweiten Reaktionsschritt modifizierten Polyolefine mit 0,1 bis 5 Masse%, bezogen auf die eingesetzten Polyolefine, an mehrfunktionell ungesättigten Monomeren vom Typ Divinylbenzen, Butadien, Isopren, Acrylsäureester von C₂-C₈-Diolen, Methacrylsäureester von C₂-C₈-Diolen, C₁₂-C₁₇-Acrylsäureester von Polyalkoholen, C₁₅-C₂₁-Methacrylsäureester von Polyalkoholen und/oder C₉-C₂₂-Bismaleinimiden erfolgt.

Beispiel für die bei der Herstellung der segmentierten Polyolefine im dritten Reaktionsschritt eingesetzten C₉-C₂₂-Bismaleinimide sind Bismaleimidobenzen, Bismaleimidodiphenylmethan und Bismaleimidotetramethyldiphenylmethan.

Mit Vorteil werden im dritten Reaktionsschritt ebenfalls Mischungen der bifunktionell ethylenisch ungesättigten Monomeren eingesetzt.

Die in den drei konsekutiven Reaktionsschritten modifizierten Polyolefine sind in an sich bekannter Weise, gegebenenfalls unter Zusatz von 0,01 bis 45 Masse%, bezogen auf die eingesetzten Polyolefine, an Hilfsstoffen, unter Erwärmung der modifizierten Polyolefine auf Temperaturen von 15°C bis 130°C oberhalb der Schmelztemperatur bzw. der Erweichungstemperatur der Polyolefine aufgeschmolzen und homogenisiert worden.

Im zweiten Reaktionsschritt und/oder im dritten Reaktionsschritt und/oder im Aufschmelzschritt können gegebenenfalls weitere Polymergranulate, ausgewählt aus Polystyrenen, Styren-Butadien-Styren-Blockcopolymeren, Styren-Ethylen-Butadien-Styren-Blockcopolymeren, Styren-Isopren-Styren-Blockcopolymeren, Ethylen-Propylen-Kautschuken, Ethylen-Propylen-Dien-Kautschuken, Polyamiden, Polyethylenterephthalat, Polybutylenterephthalat, Polycarbonaten, Polyphenylenoxiden, flüssig-kristallinen Polymeren, Polyethylenglycolen und/oder Polypropylenglycolen, sowie Oligoethylenglycole und/oder Oligopropylenglycole zugesetzt werden.

Die nach dem Aufschmelzen der segmentierten Polyolefine gegebenenfalls zugesetzten Hilfsstoffe sind 0,01 bis 2,5 Masse% Stabilisatoren, 0,1 bis 1 Masse% Antistatika, 0,2 bis 3 Masse% Pigmente, 0,05 bis 1 Masse% Nukleierungsmittel, 0,1 bis 3 Masse% Silanolkondensationskatalysatoren, 5 bis 40 Masse% Füll-und/oder Verstärkerstoffe, 2 bis 20 Masse% Flammschutzmittel und/oder 0,01 bis 1 Masse% Verarbeitungshilfsmittel, jeweils bezogen auf die eingesetzten Polyolefine.

Als Stabilisatoren werden bevorzugt Mischungen aus 0,01 bis 0,6 Masse% phenolischen Antioxidantien, 0,01 bis 0,05 Masse% Benzofuranonderivaten, 0,01 bis 0,6 Masse% Verarbeitungsstabilisatoren auf Basis von Phosphiten , 0,01 bis 0,6 Masse% Hochtemperaturstabilisatoren auf Basis von Disulfiden und Thioäthern und/oder 0,01 bis 0,8 Masse% sterisch gehinderten Aminen (HALS) eingesetzt.

Geeignete phenolische Antioxidantien sind 2-tert.Butyl-4,6-dimethylphenol, 2,6-Di-tert.butyl-4-methylphenol, 2,6-Di-tert.butyl-4-isoamylphenol, 2,6,-Di-tert.butyl-4-ethylphenol, 2-tert.Butyl-4,6-diisopropylphenol, 2,6-Dicyclopentyl-4-methylphenol, 2,6-Di-tert.-butyl-4-methoxymethylphenol, 2-tert.Butyl-4,6-dioctadecylphenol, 2,5-Di-tert.butylhydrochinon, 2,6-Di-tert.butyl-4,4-hexadecyloxyphenol, 2,2'-Methylen-bis(6-tert.butyl-4-methylphenol), 4,4'-Thio-bis-(6-tert.butyl-2-methylphenol), 3(3,5-Di-tert.butyl - 4 - hydroxyphenyl)propionsäureoctadecylester, 1,3,5 - Trimethyl - 2,4,6-tris(3',5'di-tert.butyl-4-hydroxybenzyl)benzen und/oder Pentaerythritol-tetrakis[3-(3,5-di-tert.butyl-4-hydroxyphenyl)]propionat.

Als Benzofuranonderivat ist insbesondere 5,7-Di-tert.butyl-3-(3,4-di-methylphenyl)-3H-benzofuran-2-on geeignet.

Als HALS-Verbindungen sind Bis-2,2,6,6-tetramethyl-4-piperidylsebazat und/oder Poly - ([1,1,3,3,-tetramethylbutyl)-imino]-1,3,5-triazin - 2,4,diyl)[2,2,6,6-tetramethylpiperidyl)-amino]-hexamethylen-4-(2,2,6,6-tetra-methyl)piperidyl)-imino] besonders geeignet.

Als Nukleierungsmittel werden α-Nukleierungsmittel wie Talkum oder das Natriumsalz der Methylen-bis(2,4-di-tert.butylphenol)phosphorsäure oder β-Nukleierungsmittel wie Adipinsäuredianilid, Dibenzochinacridon oder N,N'-Dicyclohexyl-2,6-naphthalindicarboxamid eingesetzt.

Als Silanolkondensationskatalysator wird bevorzugt Dibutylzinndilaurat eingesetzt.

Als Verarbeitungshilfsmittel können Calciumstearat, Magnesiumstearat und/oder Wachse eingesetzt werden.

Die segmentierten Polyolefine hoher Festigkeit und Zähigkeit werden nach einem erfindungsgemäßen Verfahren hergestellt, bei dem Mischungen aus 80 bis 99 Masse% Polyolefinpulvem mit einer Korngröße im Bereich von 0,001 bis 2 mm und 20 bis 1 Masse% Polyolefingranulaten mit einer Korngröße im Bereich von 3 bis 6 mm mit ungesättigten Monomeren in kontinuierlichen Mischern in drei konsekutiven Reaktionsschritten in fester Phase und in einer Übergangsphase Festphase/Schmelze umgesetzt werden.

Im ersten Reaktionsschritt in fester Phase erfolgt die Umsetzung gemäß Anspruch 5 bei Verweilzeiten von 5 bis 20 min, im zweiten Reaktionsschritt bei Verweilzeiten von 2 bis 10 min, im dritten Reaktionsschritt bei Verweilzeiten von 0,2 bis 2 min.

Die in den drei konsekutiven Reaktionsschritten modifizierten Polyolefine werden in an sich bekannter Weise, gegebenenfalls unter Zusatz von 0,01 bis 45 Masse%, bezogen auf die eingesetzten Polyolefine, an Hilfsstoffen, unter Erwärmung der modifizierten Polyolefine auf Temperaturen von 15 °C bis 130 °C oberhalb der Schmelztemperatur bzw. der Erweichungstemperatur der Polyolefine bei Verweilzeiten von 0,2 bis 4 min aufgeschmolzen, homogenisiert, gegebenenfalls unter Zusatz von Schleppmitteln, entgast und ausgetragen.

Die Umsetzung der Mischungen aus Polyolefinpulvem und Polyolefingranulaten mit ungesättigten Monomeren erfolgt erfindungsgemäß bevorzugt in einer Mischerkaskade aus zwei beheizbaren kontinuierlichen Schneckenförderern für pulverförmige Medien und einem Extruder hoher Homogenisierwirkung, bevorzugt einem Doppelschneckenextruder mit einem UD-Verhältnis von 26 bis 36.

Eine weitere bevorzugte Variante für die Umsetzung der Mischungen aus Polyolefinpulvern und Polyolefingranulaten mit ungesättigten Monomeren stellt die Umsetzung in einem Kaskadenextruder aus aneinandergekoppelten Mischzellen dar.

Für eine effektive Homogenisierung der Reaktionsmischungen werden die Reaktorsegmente, in denen die Umsetzung der Mischungen aus Polyolefinpulvern und Polyolefingranulaten mit ungesättigten Monomeren durchgeführt wird, vor dem Austrag der Reaktionsmischungen in das Reaktorsegment für den nächsten Reaktionsschritt bzw. für den Aufschmelzschritt mit Propellermischaggregaten ausgerüstet.

Die Seitenzuführung der Monomere in den Reaktorsegmenten für den zweiten und dritten Reaktionsschritt erfolgt bevorzugt durch Dosiersprühdosen. An den Dosierstellen bilden sich Diffusionsteilzonen aus, in denen während des Mischvorganges durch die Abkühlung als Folge der Monomerzugabe die Reaktionsgeschwindigkeit niedrig ist.

Erfindungsgemäß können die Reaktorsegmente für den zweiten Reaktionsschritt und/oder den dritten Reaktionsschritt und/oder das Reaktorsegment für den Aufschmelzschritt mit Dosiereinrichtungen für Polymergranulate und/oder hochviscose Medien ausgerüstet sein.

Der besondere Vorteil des erfindungsgemäßen Verfahrens besteht darin, daß durch gezielte Auswahl von Zusammensetzung und Partikelgröße der eingesetzten Polyolefine die Monomersorption in den Mischungen aus unterschiedlichen Polyolefinkomponenten variiert werden kann und daß sich durch die Technologie der drei Reaktionsschritte Polyolefine mit unterschiedlich verknüpften Polymersequenzen auf Basis der eingesetzten Monomere und keine Pfropfcopolymere mit statistischer Zusammensetzung der Pfropfseitenketten bilden. Der dritte Reaktionsschritt dient der partiellen Verknüpfung der durch Segmentierung modifizierten Polyolefine.

Durch das erfindungsgemäße Verfahren können daher durch Wahl der Ausgangsprodukte und Einstellung der Reaktionsbedingen segmentierte Polyolefine mit einer hohen Variationsbreite möglicher Eigenschaftskombinationen von fest, hart, zäh, weich, hydrophob und hydrophil eingestellt werden.

Die erfindungsgemäßen segmentierten Polyolefine sowie Mischungen aus diesen segmentierten Polyolefinen mit nichtmodifizierten Polyolefinen sind bevorzugt zur Herstellung von Folien, Fasern, Platten, Beschichtungen, Rohren, Hohlkörpern und Schaumstoffen geeignet.

Die Erfindung wird durch nachfolgende Beispiele erläutert :

### Beispiel 1

Für die Herstellung eines segmentierten Polyolefins wird eine Mischung aus 85 Masse% eines pulverförmigen statistischen Polypropylen-Copolymers (Schmelzindex 0,95 g/10 min bei 230°C/2,16 kp, Ethylengehalt 3,5 Gew.%, mittlere Korngröße 0,15 mm ) und 15 Masse% eines LDPE - Granulats (Dichte 0,918 g/cm³, Schmelzindex 0,55 g/10 min bei 190°C/2,16 kp, mittlerer Partikeldurchmesser 4,5 mm) eingesetzt.

Die Umsetzung mit den Reaktanten erfolgt kontinuierlich in einer Mischerkaskade aus zwei beheizbaren kontinuierlichen Schneckenförderern und einem Doppelschneckenextruder.

Die Mischung aus Polypropylen und Polyethylen wird im ersten Reaktionsschritt gemeinsam mit 0,1 Masse% Calciumstearat, 18 Masse% Methylmethacrylat und 0,18 Masse% Bis(tert.butylperoxy)-2,5-dimethylhexan, 0,20 Masse% tert.Butylperoxybenzoat und 0,12 Masse% Dibenzoylperoxid, jeweils bezogen auf die eingesetzte Polyolefinmischung, in einen auf 78°C beheizten kontinuierlichen Schneckenförderer dosiert. Nach einer Verweilzeit von 9,5 min. wird die Reaktionsmischung in einen zweiten Schneckenförderer überführt, der auf 95°C beheizt ist.

Im zweiten Reaktionsschritt in fester Phase werden zur Reaktionsmischung im zweiten Schneckenförderer eine Mischung aus 6,5 Masse% Styren und 4,5 Masse% Hexylacrylat dosiert, die Verweilzeit im zweiten Schneckenförderer beträgt 4,5 Minuten.

Die Mischung wird in einen hermetisierten Doppelschneckenextruder mit einem Temperaturprofil 120/145/165/175/190/220/190/170°C dosiert, dessen Einzugszone mit einer Mischung aus 10 Vol.% Butadien und 90 Vol% Stickstoff begast ist. In der Zone 6 werden der Schmelze des segmentierten Polyolefins 0,4 Masse% Natriumbicarbonat, 0,5 Masse% Calciumpimelat, 0,08 Masse% Pentaerythritol - tetrakis[3-(3,5-di-tert.butyl-4-hydroxy-phenyl)]propionat und 0,1 Masse% Bis-2,2,6,6-tetramethyl-4-piperidylsebazat zugesetzt.

Die Reaktionsmischung wird einer Vacuumentgasung unterzogen, bei 180°C ausgetragen und granuliert.

Das segmentierte Polyolefin besitzt einen durch IR-Spektroskopie ermittelten Gehalt an gebundenem Butadien von 0,18 Masse%, an gebundenem Methylmethacrylat von 16,4 Masse%, an gebundenem Styren von 6,2 Masse% und an gebundenem Hexylacrylat von 4,2 Masse%. Der Schmelzindex beträgt 1,15 g/10 min bei 230°C/2, 16 kp.

### Beispiel 2

Für die Herstellung eines segmentierten Polyolefins wird eine Mischung aus 55 Masse% eines pulverförmigen Ethylen-Homopolymers (Schmelzindex von 0,20 g/10 min bei 190°C/5 kp, mittlere Korngröße 0,08 mm) und 45 Masse% eines granulatförmigen Polypropylen-Blockcopolymers (Dichte 0,91 g/cm³, Schmelzindex 0,45 g/10 min bei 190°C/5 kp, Ethylengehalt 6,5 Masse%, mittlerer Partikeldurchmesser 3,4 mm) eingesetzt.

Die Umsetzung mit den Reaktanten erfolgt in einem Kaskadenextruder aus vier aneinandergekoppelten Mischzellen mit Seitenzuführung für flüssige Monomere durch Dosiersprühdosen in den Mischzellen 2 und 3 und einer an die Mischzelle 4 gekoppelten Seitenstrangdosierung für pulverförmige Medien.

Die Polyolefinmischung wird im ersten Reaktionsschritt gemeinsam mit 0,15 Masse% Magnesiumstearat, 12 Masse% Acrylnitril, 8 Masse% Methacrylsäure, 0,15 Masse% tert. Butylperbenzoat und 0,18 Masse% tert.Butylperbutyrat, jeweils bezogen auf die eingesetzte Polyolefinmischung, in die auf 65°C beheizte 1. Mischzelle des Kaskadenextruders dosiert. Nach einer Verweilzeit von 11,5 min. wird die Reaktionsmischung in die zweite Mischzelle überführt, die auf 95°C beheizt ist.

Im zweiten Reaktionsschritt in fester Phase werden zur Reaktionsmischung in der zweiten Mischzelle über eine Dosiersprühdose eine Mischung aus 4 Masse% Isopropylvinylether und 4 Masse% Vinyltrimethoxysilan, jeweils bezogen auf das Polyolefingemisch, dosiert, die Verweilzeit in der zweiten Mischzelle beträgt 4,5 Minuten.

Die Mischung wird in die auf 108°C temperierte dritte Mischzelle dosiert, in die über eine Dosiersprühdose 2 Masse%, bezogen auf das Polyolefingemisch, einer 10% Lösung von Divinylbenzen in Aceton eingetragen werden. Die Verweilzeit in der dritten Mischzelle des Kaskadenextruders beträgt 1,2 Minuten.

Nach Überführung in die vierte Mischzelle wird das segmentierte Polyolefin bei 215°C aufgeschmolzen und mit dem über eine Seitenstrangdosierung zugesetzen Hilfsstoffgemisch ( 0,5 Masse% Calciumpimelat, 0,1 Masse% Irganox 1010 und 0,1 Masse% Irgaphos 168, jeweils bezogen auf das Polyolefingemisch) homogenisiert.

Nach Austrag und Granulierung wurden im segmentierten Polyolefin durch IR-Spektroskopie folgende Masseanteile an gebundenen Monomeren bestimmt :

| | | | |
|---|---|---|---|
| Acrylnitril | 11,4% | Methacrylsäure | 7,7% |
| Divinylbenzen | 0,16% | Isopropylvinylether | 3,8% |
| Vinyltrimethoxysilan | 3,7% | | |

Der Schmelzindex beträgt 0,75g/10 min bei 230°C/2,16 kp.

## Patentansprüche

1. Segmentierte Polyolefine hoher Festigkeit und Zähigkeit erhältlich durch Umsetzung von Mischungen aus 80 bis 99 Masse% Polyolefinpulvern mit einer Korngröße im Bereich von 0,001 bis 2 mm und 20 bis 1 Masse% Polyolefingranulaten mit einer Korngröße im Bereich von 3 bis 6 mm mit ungesättigten Monomeren in kontinuierlichen Mischern in zwei konsekutiven Reaktionsschritten in fester Phase, einem Reaktionsschritt in einer Übergangsphase Festphase/Schmelze sowie in einem Schmelzehomogenisierungsschritt, wobei
- die eingesetzten Polyolefinpulver aus Propylen-Homopolymeren und/oder Copolymeren aus Propylen und α-Olefinen mit 2 bis 18 C-Atomen, Ethylenpolymeren, Polybuten-1, Poly-4-methylpenten-1, Mischungen der genannten Polyolefine sowie aus Mischungen dieser Polyolefinpulver bestehen, und
- die eingesetzten Polyolefingranulate aus Ethylenpolymeren, Ethylen-Propylen-Copolymeren, Copolymeren aus Ethylen und α-Olefinen mit 4 bis 18 C-Atomen, Ethylen-Propylen-Dien-Terpolymeren, Ethylen-Butadien-Styren-Terpolymeren, Propylen-Blockcopolymeren, Mischungen dieser Polyolefine oder aus Mischungen dieser Polyolefingranulate bestehen, wobei die Polyolefine im Polyolefingranulat verschieden von den Polyolefinen im Polyolefinpulver sind, und wobei
a) im ersten Reaktionsschritt in fester Phase eine Umsetzung der Mischungen aus Polyolefinpulvern und Polyolefingranulaten bei Reaktionstemperaturen von 100 °C bis 40 °C unterhalb der Schmelztemperatur bzw. der Erweichungstemperatur der Polyolefine mit 5 bis 30 Masse%, bezogen auf die eingesetzten Polyolefine, Acrylsäure, Acrylnitril, Acrylsäure-C₁-C₁₈-alkyl-ester, Methacrylsäure, Methacrylnitril, Methacrylsäure-C₁-C₁₈-alkyl-ester, Styren, Mono-C₁-C₁₂-alkyl-styrenen; Di-C₁-C₆-alkyl-styrenen, C₁-C₁₂-Alkoxy-styrenen, Monohalogenstyrenen, Styrencarbonsäure-C₁-C₁₁-alkylestern und/oder ungesättigten C₄-C₂₁-Dicarbonsäureanhydriden in Gegenwart von 0,05 bis 0,85 Masse%, bezogen auf die eingesetzten Polyolefine, an Acrylperoxiden, Alkylperoxiden, Hydroperoxiden, Peroxycarbonaten und/oder Perestern erfolgt,
b) im zweiten Reaktionsschritt in fester Phase bei Reaktionstemperaturen von 60 °C bis 20 °C unterhalb der Schmelztemperatur bzw. der Erweichungstemperatur der Polyolefine eine Umsetzung der in a) modifizierten Polyolefine mit 0,5 bis 20 Masse%, bezogen auf die eingesetzten Polyolefine, Acrylnitril, Methacrylnitril, Methacrylsäure-C₁-C₁₈-alkyl-ester, Styren, Mono-C₁-C₁₂-alkyl-styrenen; Di-C₁-C₆-alkyl-styrenen, C₁-C₁₂-Alkoxy-styrenen, Monohalogenstyrenen, Styrencarbonsäure-C₁-C₁₁-alkylestern, C₅-C₁₄-Vinylsilanen, C₆-C₁₅-Acrylatsilanen, Vinylpyridin, Vinyloxazolin, Isopropenyloxazolin, Vinylpyrrolidon, Amino-C₁-C₈-alkyl-acrylaten, Amino-C₁-C₈-alkyl-methacrylaten, C₃-C₂₀-Vinylethern, Hydroxy-C₁-C₈-alkyl-acrylaten, Hydroxy-C₁-C₈-alkyl-methacrylaten und gegebenenfalls mit 0,1 bis 5 Masse%, bezogen auf die eingesetzten Polyolefine, Divinylbenzen, Allylacrylat, Allylmethacrylat, Diacrylsäureestern von C₂-C₈-Diolen, Dimethacrylsäureestern von C₂-C₇-Diolen, C₁₂-C₁₇-Acrylsäureester von Polyalkoholen und/oder C₁₅-C₂₁-Methacrylsäureester von Polyalkoholen erfolgt,
c) im dritten Reaktionsschritt in einer Übergangsphase Festphase/Schmelze bei Reaktionstemperaturen von 40 °C unterhalb der Schmelztemperatur bzw. der Erweichungstemperatur der Polyolefine bis 40 °C oberhalb der Schmelztemperatur bzw. der Erweichungstemperatur der Polyolefine eine Umsetzung der in a) und nachfolgend in b) modifizierten Polyolefine mit 0,1 bis 5 Masse%, bezogen auf die eingesetzten Polyolefine, an mehrfunktionell ungesättigten Monomeren vom Typ Divinylbenzen, Butadien, Isopren, Acrylsäureester von C₂-C₈-Diolen, Dimetharylsäureester von C₂-C₇-Diolen, C₁₂-C₁₇-Acrylsäureester von Polyalkoholen, C₁₅-C₂₁-Methacrylsäureester von Polyalkoholen und/oder C₉-C₂₂-Bismaleinimide erfolgt, und
d) in einem Schmelzehomogenisierungsschritt die in den drei Reaktionsschritten a, b und c modifizierten Polyolefine in an sich bekannter Weise, gegebenenfalls unter Zusatz von 0,01 bis 45 Masse%, bezogen auf die eingesetzten Polyolefine, an Hilfsstoffen, unter Erwärmung der modifizierten Polyolefine auf Temperaturen von 15 °C bis 130 °C oberhalb der Schmelztemperatur bzw. der Erweichungstemperatur der Polyolefine aufgeschmolzen und homogenisiert werden,
und wobei gegebenenfalls im zweiten Reaktionsschritt b) und/oder im dritten Reaktionsschritt c) und/oder im Schmelzehomogenisierungsschritt d) 1 bis 40 Masse%, bezogen auf die Summe der eingesetzten Polyolefine, weitere Polymergranulate, ausgewählt aus Polystyrenen, Styren-Butadien-Styren-Blockcopolymeren, Styren-Ethylen-Butadien-Styren-Blockcopolymeren, Styren-Isopren-Styren-Blockcopolymeren, Ethylen-Propylen-Kautschuken, Ethylen-Propylen-Dien-Kautschuken, Polyamiden, Polyethylenterephthalat, Polybutylenterephthalat, Polycarbonaten, Polyphenylenoxiden, flüssig-kristallinen Polymeren, Polyethylenglycolen und/oder Polypropylenglycolen, sowie Oligoethylenglycole und/oder Oligopropylenglycole zugesetzt werden können.

2. Segmentierte Polyolefine nach Anspruch 1, **dadurch gekennzeichnet, dass** die als Polyolefinpulver eingesetzten Ethylenpolymere aus unter Einsatz von Ziegler-Natta-Katalysatoren oder Metallocenkatalysatoren hergestellten Ethylenpolymeren bestehen.

3. Segmentierte Polyolefine nach Anspruch 1 und 2, **dadurch gekennzeichnet, daß** die eingesetzten Polyolefingranulate aus Ethylenpolymeren bestehen, die unter Anwendung radikalischer Initiatoren oder unter Anwendung von Ziegler-Natta-Katalysatoren bzw. Metallocenkatalysatoren hergestellt werden.

4. Segmentierte Polyolefine nach Anspruch 1 bis 3, **dadurch gekennzeichnet, daß** die nach den drei konsekutiven Reaktionsschritten zugesetzten Hilfsstoffe 0,01 bis 2,5 Masse% Stabilisatoren, 0,1 bis 1 Masse% Antistatika, 0,2 bis 3 Masse% Pigmente, 0,05 bis 1 Masse% Nukleierungsmittel, 0,1 bis 3 Masse% Silanolkondensationskatalysatoren, 5 bis 40 Masse% Füll- und/oder Verstärkerstoffe, 2 bis 20 Masse% Flammschutzmittel und/oder 0,01 bis 1 Masse% Verarbeitungshilfsmittel, bezogen auf die eingesetzten Polyolefine, sind.

5. Verfahren zur Herstellung segmentierter Polyolefine hoher Festigkeit und Zähigkeit, **dadurch gekennzeichnet, daß** Mischungen aus 80 bis 99 Masse% Polyolefinpulvern mit einer Korngröße im Bereich von 0,001 bis 2 mm und 20 bis 1 Masse-% Polyolefingranulaten mit einer Korngröße im Bereich von 3 bis 6 mm mit ungesättigten Monomeren in kontinuierlichen Mischern in zwei konsekutiven Reaktionsschritten in fester Phase, einem Reaktionsschritt in einer Übergangsphase Festphase/Schmelze sowie in einem Schmelzehomogenisierungsschritt unterzogen werden, wobei
- die eingesetzten Polyolefinpulver aus Propylen-Homopolymeren und/oder Copolymeren aus Propylen und α-Olefinen mit 2 bis 18 C-Atomen, Ethylenpolymeren, Polybuten-1, Poly-4-methylpenten-1, Mischungen der genannten Polyolefine sowie aus Mischungen dieser Polyolefinpulver bestehen, und
- die eingesetzten Polyolefingranulate aus Ethylenpolymeren, Ethylen-Propylen-Copolymeren, Copolymeren aus Ethylen und α-Olefinen mit 4 bis 18 C-Atomen, Ethylen-Propylen-Dien-Terpolymeren, Ethylen-Butadien-Styren-Terpolymeren, Propylen-Blockcopolymeren, Mischungen dieser Polyolefine oder aus Mischungen dieser Polyolefingranulate bestehen, wobei die Polyolefine im Polyolefingranulat verschieden von den Polyolefinen im Polyolefinpulver sind, und wobei
a) im ersten Reaktionsschritt in fester Phase eine Umsetzung der Mischungen aus Polyolefinpulvem und Polyolefingranulaten bei Reaktionstemperaturen von 100 °C bis 40 °C unterhalb der Schmelztemperatur bzw. der Erweichungstemperatur der Polyolefine mit 5 bis 30 Masse%, bezogen auf die eingesetzten Polyolefine, Acrylsäure, Acrylnitril, Acrylsäure-C₁-C₁₈-alkyl-ester, Methacrylsäure, Methacrylnitril, Methacrylsäure-C₁-C₁₈-alkyl-ester, Styren, Mono-C₁-C₁₂-alkyl-styrenen; Di-C₁-C₆-alkyl-styrenen, C₁-C₁₂-Alkoxy-styrenen, Monohalogenstyrenen, Styrencarbonsäure-C₁-C₁₁-alkylestern und/oder ungesättigten C₄-C₂₁-Dicarbonsäureanhydriden in Gegenwart von 0,05 bis 0,85 Masse%, bezogen auf die eingesetzten Polyolefine, an Acylperoxiden, Alkylperoxiden, Hydroperoxiden, Peroxycarbonaten und/oder Perestern erfolgt,
b) im zweiten Reaktionsschritt in fester Phase bei Reaktionstemperaturen von 60 °C bis 20 °C unterhalb der Schmelztemperatur bzw. der Erweichungstemperatur der Polyolefine eine Umsetzung der in a) modifizierten Polyolefine mit 0,5 bis 20 Masse%, bezogen auf die eingesetzten Polyolefine, Acrylnitril, Methacrylnitril, Methacrylsäure-C₁-C₁₈-alkyl-ester, Styren, Mono-C₁-C₁₂-alkyl-styrenen; Di-C₁-C₆-alkyl-styrenen, C₁-C₁₂-Alkoxy-styrenen, Monohalogenstyrenen, Styrencarbonsäure-C₁-C₁₁-alkylestern, C₅-C₁₄-Vinylsilanen, C₆-C₁₅-Acrylatsilanen, Vinylpyridin, Vinyloxazolin, Isopropenyloxazolin, Vinylpyrrolidon, Amino-C₁-C₈-alkyl-acrylaten, Amino-C₁-C₈-alkyl-methacrylaten, C₃-C₂₀-Vinylethern, Hydroxy-C₁-C₈-alkyl-acrylaten, Hydroxy-C₁-C₈-alkyl-methacrylaten und gegebenenfalls mit 0,1 bis 5 Masse%, bezogen auf die eingesetzten Polyolefine, Divinylbenzen, Allylacrylat, Allylmethacrylat, Acrylsäureestem von C₂-C₈-Diolen, Methacrylsäureestem von C₂-C₈-Diolen, C₁₂-C₁₇-Acrylsäureester von Polyalkoholen und/oder C₁₅-C₂₁-Methacrylsäureester von Polyalkoholen erfolgt,
c) im dritten Reaktionsschritt in einer Übergangsphase Festphase/Schmelze bei Reaktionstemperaturen von 40 °C unterhalb der Schmelztemperatur bzw. der Erweichungstemperatur der Polyolefine bis 40 °C oberhalb der Schmelztemperatur bzw. der Erweichungstemperatur der Polyolefine eine Umsetzung der in a) und nachfolgend in b) modifizierten Polyolefine mit 0,1 bis 5 Masse%, bezogen auf die eingesetzten Polyolefine, an mehrfunktionell ungesättigten Monomeren vom Typ Divinylbenzen, Butadien, Isopren, Acrylsäureester von C₂-C₈-Diolen, Methylacrylsäureestern von C₂-C₈-Diolen, C₁₂-C₁₇-Acrylsäureester von Polyalkoholen, C₁₅-C₂₁-Methacrylsäureester von Polyalkoholen und/oder C₉-C₂₂-Bismaleinimide erfolgt und
d) in einem Schmelzehomogenisierungsschritt die in den drei Reaktionsschritten a, b und c modifizierten Polyolefine in an sich bekannter Weise, gegebenenfalls unter Zusatz von 0,01 bis 45 Masse%, bezogen auf die eingesetzten Polyolefine, an Hilfsstoffen, unter Erwärmung der modifizierten Polyolefine auf Temperaturen von 15 °C bis 130 °C oberhalb der Schmelztemperatur bzw. der Erweichungstemperatur der Polyolefine bei Verweilzeiten von 0,2 bis 4 min aufgeschmolzen, homogenisiert, gegebenenfalls unter Zusatz von Schleppmitteln entgast, und ausgetragen werden,
und wobei gegebenenfalls im zweiten Reaktionsschritt b) und/oder im dritten Reaktionsschritt c) und/oder im Schmelzehomogenisierungsschritt d) 1 bis 40 Masse%, bezogen auf die Summe der eingesetzten Polyolefine, weitere Polymergranulate, ausgewählt aus Polystyrenen, Styren-Butadien-Styren-Blockcopolymeren, Styren, Ethylen-Butadien-Styren-Blockcopolymeren, Styren-Isopren-Styren-Blockcopolymeren, Ethylen-Propylen-Kautschuken, Ethylen-Propylen-Dien-Kautschuken, Polyamiden, Polyethylenterephthalat, Polybutylenterephthalat, Polycarbonaten, Polyphenylenoxiden, flüssig-kristallinen Polymeren, Polyethylenglycolen und/oder Polypropylenglycolen, sowie Oligoethylenglycole und/oder Oligopropylenglycole zugesetzt werden können.

6. Verfahren zur Herstellung segmentierter Polyolefine nach Anspruch 5, **dadurch gekennzeichnet, daß** die Umsetzung der Mischungen aus Polyolefinpulvern und Polyolefingranulaten mit ungesättigten Monomeren in einer Mischerkaskade aus zwei beheizbaren kontinuierlichen Schneckenförderern für pulverförmige Medien und einem Extruder hoher Homogenisierwirkung, bevorzugt einem Doppelschneckenextruder, erfolgt.

7. Verfahren zur Herstellung segmentierter Polyolefine nach Anspruch 5, **dadurch gekennzeichnet, daß** die Umsetzung der Mischungen aus Polyolefinpulvern und Polyolefingranulaten mit ungesättigten Monomeren in einem Kaskadenextruder aus aneinandergekoppelten Mischzellen erfolgt.

8. Verfahren zur Herstellung segmentierter Polyolefine nach Anspruch 5 bis 7, **dadurch gekennzeichnet, daß** die Reaktorbaugruppen, in denen die Umsetzung der Mischungen aus Polyolefinpulvern und Polyolefingranulaten mit ungesättigten Monomeren durchgeführt wird, mit Propellermischaggregaten zur effektiven Homogenisierung der Reaktionsmischungen vor Austrag der Reaktionsmischungen in die Reaktorbaugruppe für den Reaktionsschritt b bzw. c bzw. für den Aufschmelzschritt d ausgerüstet sind.

9. Verfahren zur Herstellung segmentierter Polyolefine nach einem oder mehreren der Ansprüche 5 bis 8, **dadurch gekennzeichnet, daß** die Reaktorbaugruppen für die Reaktionsschritte b) und/oder c) und/oder die Reaktorbaugruppe für den Aufschmelzschritt d) mit Dosiereinrichtungen für Polymergranulate und/oder hochviscose Medien ausgerüstet sind.

10. Verwendung segmentierter Polyolefine nach einem oder mehreren der Ansprüche 1 bis 4, gegebenenfalls im Gemisch mit üblichen Polyolefinen, zur Herstellung von Folien, Fasern, Platten, Beschichtungen, Rohren, Hohlkörpern und Schaumstoffen.

## Claims

1. Segmented polyolefins of high strength and tenacity obtainable by converting mixtures of 80 to 99 % by weight of polyolefin powders having a particle size ranging from 0.001 to 2 mm and 20 to 1 % by weight of polyolefin granulates having a particle size ranging from 3 to 6 mm with unsaturated monomers in continuous mixers in two consecutive reaction steps in the solid phase, one reaction step in a solid phase/melt transition phase as well as in one melt homogenization step, wherein
- the polyolefin powders used consist of propylene homopolymers and/or copolymers of propylene and α-olefins having 2 to 18 C-atoms, ethylene polymers, polybutene-1, poly-4-methylpentene, mixtures of the above polyolefins as well as mixtures of these polyolefin powders, and
- the polyolefin granulates used consist of ethylene polymers, ethylene-propylene copolymers, copolymers of ethylene and α-olefins having 4 to 18 C-atoms, ethylene-propylene-diene terpolymers, ethylene-butadiene-styrene terpolymers, propylene block copolymers, mixtures of these polyolefins or of mixtures of these polyolefin granulates, the polyolefins in the polyolefin granulate differing from the polyolefins in the polyolefin powder, and wherein
a) in the first reaction step, in the solid phase, a conversion of the mixtures of polyolefin powders and polyolefin granulates with 5 to 30 % by weight, related to the polyolefins used, of acrylic acid, acrylonitrile, acrylic-acid-C₁-C₁₈ alkyl esters, methacrylic acid, methacrylonitrile, methacrylic-acid-C₁-C₁₈ alkyl esters, styrene, mono-C₁-C₁₂ alkyl styrenes, di-C₁-C₆ alkyl styrenes, C₁-C₁₂ alkoxy styrenes, monohalogen styrenes, styrene-carboxylic acid-C₁-C₁₁ alkyl esters and/or unsaturated C₄-C₂₁ dicarboxylic-acid anhydrides is performed in the presence of 0.05 to 0.85 % by weight, related to the polyolefins used, of acryl peroxides, alkyl peroxides, hydroperoxides, peroxycarbonates and/or peresters at reaction temperatures ranging from 100 to 40 °C below the melting temperature or softening temperature of the polyolefins,
b) in the second reaction step, in the solid phase, a conversion of the polyolefins modified in a) with 0.5 to 20 % by weight, related to the polyolefins used, of acrylonitrile, methacrylonitrile, methacrylic-acid-C₁-C₁₈ alkyl esters, styrene, mono-C₁-C₁₂ alkyl styrenes, di-C₁-C₆ alkyl styrenes, C₁-C₁₂ alkoxy styrenes, monohalogen styrenes, styrene-carboxylic acid-C₁-C₁₁ alkyl esters, C₅-C₁₄ vinyl silanes, C₆-C₁₅ acrylate silanes, vinyl pyridine, vinyl oxazoline, isopropenyl oxazoline, vinyl pyrrolidone, amino-C₁-C₈ alkyl acrylates, amino-C₁-C₈ alkyl methacrylates, C₃-C₂₀ vinyl ethers, hydroxy-C₁-C₈ alkyl acrylates, hydroxy-C₁-C₈ alkyl methacrylates and, if required, with 0.1 to 5 % by weight, related to the polyolefins used, of divinyl benzene, allyl acrylate, allyl methacrylate, diacrylic-acid esters of C₂-C₈ diols, dimethacrylic-acid esters of C₂-C₇ diols, C₁₂-C₁₇ acrylic-acid esters of polyalcohols and/or C₁₅-C₂₁ methacrylic-acid esters of polyalcohols is performed at reaction temperatures ranging from 60 to 20 °C below the melting temperature or softening temperature of the polyolefins,
c) in the third reaction step, in a solid phase/melt transition phase, a conversion of the polyolefins modified in a) and subsequently in b) with 0.1 to 5 % by weight, related to the polyolefins used, of multifunctionally unsaturated monomers of the type of divinyl benzene, butadiene, isoprene, acrylic-acid esters of C₂-C₈ diols, dimethacrylic-acid esters of C₂-C₇ diols, C₁₂-C₁₇ acrylic-acid esters of polyalcohols, C₁₅-C₂₁ methacrylic-acid esters of polyalcohols and/or C₉-C₂₂ bismaleine imide is performed at reaction temperatures ranging from 40 °C below the melting temperature of softening temperature of the polyolefins to 40 °C above the melting temperature or softening temperature of the polyolefins, and
d) in a melt homogenization step, the polyolefins modified in the three reaction steps a), b) and c) are melted and homogenized, in a manner well-known as such, by adding, if required, 0.01 to 45 % by weight, related to the polyolefins used, of auxiliary agents, while heating the modified polyolefins to temperatures ranging from 15 to 130 °C above the melting temperature or softening temperature of the polyolefins,
and wherein in the second reaction step b) and/or in the third reaction step c) and/or in the melt homogenization step d), 1 to 40 % by weight, related to the sum of the polyolefins used, of additional polymer granulates, selected from the group consisting of polystyrenes, styrene-butadiene-styrene block copolymers, styrene-ethylene-butadiene-styrene block copolymers, styrene-isoprene-styrene block copolymers, ethylene-propylene rubbers, ethylene-propylene-diene rubbers, polyamides, polyethylene terephthalate, polybutylene terephthalate, polycarbonates, polyphenylene oxides, liquid-crystalline polymers, polyethylene glycols and/or polypropylene glycols as well as oligoethylene glycols and/or oligopropylene glycols may be added if required.

2. The segmented polyolefins of Claim 1, wherein the ethylene polymers used as the polyolefin powder consist of ethylene polymers manufactured by the use of Ziegler-Natta catalysts or metallocene catalysts.

3. Segmented polyolefins of Claims 1 and 2, wherein the polyolefin granulates used consist of ethylene polymers manufactured by the use of radical initiators or by the use of Ziegler-Natta catalysts or metallocene catalysts.

4. Segmented polyolefins of Claims 1 to 3, wherein the auxiliary agents added after the three consecutive reaction steps are 0.01 to 2.5 % by weight of stabilizers, 0.1 to 1 % by weight of antistatics, 0.2 to 3 % by weight of pigments, 0.05 to 1 % by weight of nucleation agents, 0.1 to 3 % by weight of silanol-condensation catalysts, 5 to 40 % by weight of filling and/or reinforcing agents, 2 to 20 % by weight of flameproofing agents and/or 0.01 to 1 % by weight of processing agents, related to the polyolefins used.

5. A method for the manufacture of segmented polyolefins of high strength and tenacity, **characterized in that** mixtures of 80 to 99 % by weight of polyolefin powders having a particle size ranging from 0.001 to 2 mm and 20 to 1 % by weight of polyolefin granulates having a particle size ranging from 3 to 6 mm with unsaturated monomers are subjected in continuous mixers to two consecutive reaction steps in the solid phase, one reaction step in a solid phase/melt transition phase as well as one melt homogenization step, wherein
- the polyolefin powders used consist of propylene homopolymers and/or copolymers of propylene and α-olefins having 2 to 18 C-atoms, ethylene polymers, polybutene-1, poly-4-methylpentene, mixtures of the above polyolefins as well as mixtures of these polyolefin powders, and
- the polyolefin granulates used consist of ethylene polymers, ethylene-propylene copolymers, copolymers of ethylene and α-olefins having 4 to 18 C-atoms, ethylene-propylene-diene terpolymers, ethylne-butadiene-styrene terpolymers, propylene block copolymers, mixtures of these polyolefins or of mixtures of these polyolefin granulates, the polyolefins in the polyolefin granulate differing from the polyolefins in the polyolefin powder, and wherein
a) in the first reaction step, in the solid phase, a conversion of the mixtures of polyolefin powders and polyolefin granulates with 5 to 30 % by weight, related to the polyolefins used, of acrylic acid, acrylonitrile, acrylic-acid-C₁-C₁₈ alkyl esters, methacrylic acid, methacrylonitrile, methacrylic-acid-C₁-C₁₈ alkyl esters, styrene, mono-C₁-C₁₂ alkyl styrenes, di-C₁-C₆ alkyl styrenes, C₁-C₁₂ alkoxy styrenes, monohalogen styrenes, styrene-carboxylic acid-C₁-C₁₁ alkyl esters and/or unsaturated C₄-C₂₁ dicarboxylic-acid anhydrides is performed in the presence of 0.05 to 0.85 % by weight, related to the polyolefins used, of acryl peroxides, alkyl peroxides, hydroperoxides, peroxycarbonates and/or peresters at reaction temperatures ranging from 100 to 40 °C below the melting temperature or softening temperature of the polyolefins,
b) in the second reaction step, in the solid phase, a conversion of the polyolefins modified in a) with 0.5 to 20 % by weight, related to the polyolefins used, of acrylonitrile, methacrylonitrile, methacrylic-acid-C₁-C₁₈ alkyl esters, styrene, mono-C₁-C₁₂ alkyl styrenes, di-C₁-C₆ alkyl styrenes, C₁-C₁₂ alkoxy styrenes, monohalogen styrenes, styrene-carboxylic acid-C₁-C₁₁ alkyl esters, C₅-C₁₄ vinyl silanes, C₆-C₁₅ acrylate silanes, vinyl pyridine, vinyl oxazoline, isopropenyl oxazoline, vinyl pyrrolidone, amino-C₁-C₈ alkyl acrylates, amino-C₁-C₈ alkyl methacrylates, C₃-C₂₀ vinyl ethers, hydroxy-C₁-C₈ alkyl acrylates, hydroxy-C₁-C₈ alkyl methacrylates and, if required, with 0.1 to 5 % by weight, related to the polyolefins used, of divinyl benzene, allyl acrylate, allyl methacrylate, diacrylic-acid esters of C₂-C₈ diols, dimethacrylic-acid esters of C₂-C₇ diols, C₁₂-C₁₇ acrylic-acid esters of polyalcohols and/or C₁₅-C₂₁ methacrylic-acid esters of polyalcohols is performed at reaction temperatures ranging from 60 to 20 °C below the melting temperature or softening temperature of the polyolefins,
c) in the third reaction step, in a solid phase/melt transition phase, a conversion of the polyolefins modified in a) and subsequently in b) with 0.1 to 5 % by weight, related to the polyolefins used, of multifunctionally unsaturated monomers of the type of divinyl benzene, butadiene, isoprene, acrylic-acid esters of C₂-C₈ diols, dimethacrylic-acid esters of C₂-C₇ diols, C₁₂-C₁₇ acrylic-acid esters of polyalcohols, C₁₅-C₂₁ methacrylic-acid esters of polyalcohols and/or C₉-C₂₂ bismaleine imide is performed at reaction temperatures ranging from 40 °C below the melting temperature or softening temperature of the polyolefins to 40 °C above the melting temperature or softening temperature of the polyolefins, and
d) in a melt homogenization step, the polyolefins modified in the three reaction steps a), b) and c) are melted, homogenized, degassed by adding entrainers if required, and discharged using residence times ranging from 0.2 to 4 min, in a manner well-known as such, by adding, if required, 0.01 to 45 % by weight, related to the polyolefins used, of auxiliary agents, while heating the modified polyolefins to temperatures ranging from 15 to 130 °C above the melting temperature or softening temperature of the polyolefins,
and wherein in the second reaction step b) and/or in the third reaction step c) and/or in the melt homogenization step d), 1 to 40 % by weight, related to the sum of the polyolefins used, of additional polymer granulates, selected from the group consisting of polystyrenes, styrene-butadiene-styrene block copolymers, styrene-ethylene-butadiene-styrene block copolymers, styrene-isoprene-styrene block copolymers, ethylene-propylene rubbers, ethylene-propylene-diene rubbers, polyamides, polyethylene terephthalate, polybutylene terephthalate, polycarbonates, polyphenylene oxides, liquid-crystalline polymers, polyethylene glycols and/or polypropylene glycols as well as oligoethylene glycols and/or oligopropylene glycols may be added if required.

6. The method for the manufacture of segmented polyolefins of Claim 5, wherein the conversion of the mixtures of polyolefin powders and polyolefin granulates with unsaturated monomers is performed in a mixer cascade of two heatable continuous screw conveyors for powdery media and one extruder having a high homogenization effect, preferably a twin-screw extruder.

7. The method for the manufacture of segmented polyolefins of Claim 5, wherein the conversion of the mixtures of polyolefin powders and polyolefin granulates with unsaturated monomers is performed in a cascade extruder of mixing cells coupled together.

8. The method for the manufacture of segmented polyolefins of Claims 5 to 7, wherein the reactor assemblies in which the conversion of the mixtures of polyolefin powders and polyolefin granulates with unsaturated monomers is performed are provided with propeller mixing units for the efficient homogenization of the reaction mixtures before the reaction mixtures are discharged into the reactor assembly for the reaction step b) and c) and for the melting step d), respectively.

9. The method for the manufacture of segmented polyolefins of one or more of Claims 5 to 8, wherein the reactor assemblies for the reaction steps b) and/or c) and/or the reactor assembly for the meltin step d) are provided with polymer granulate feeders and/or high-viscosity medium feeders.

10. Use of segmented polyolefins of one or more of Claims 1 to 4, in the mixture with usual polyolefins if required, for the manufacture of sheets, fibers, plates, coatings, pipes, hollow parts and foamed plastics.

## Revendications

1. Polyoléfines segmentées, présentant une solidité et une ténacité augmentées, pouvant être obtenues par la conversion d'un mélange de 80 à 99 % en poids de poudres de polyoléfines ayant une granulométrie dans la plage de 0,001 à 2 mm et de 20 à 1 % en poids de granulés de polyoléfines ayant une granulométrie dans la plage de 3 à 6 mm, avec des monomères insaturés, dans des mélangeurs continus assurant deux étapes de réaction consécutives en phase solide, une étape de réaction qui est une transition phase solide / phase fondue, ainsi qu'une étape d'homogénéisation de la masse fondue, où
- les poudres des polyoléfines mises en oeuvre sont constituées par des homopolymères du propylène et / ou des copolymères du propylène et d'α-oléfines ayant de 2 à 18 atomes de carbone, des polymères de l'éthylène, des polymères du butène-1, des polymères du 4-méthylpentène-1, des mélanges des polyoléfines susmentionnées, ainsi que des mélanges de ces poudres de polyoléfines, et
- les granulés des polyoléfines mis en oeuvre sont constitués par des polymères de l'éthylène, des copolymères éthylène - propylène, des copolymères de l'éthylène et d'α-oléfines ayant de 4 à 18 atomes de carbone, des terpolymères éthylène - propylène - diène, des terpolymères éthylène - butadiène - styrène, des copolymères bloc du propylène, des mélanges de ces polyoléfines ou de mélanges de ces granulés de polyoléfines, où les polyoléfines des granulés des polyoléfines sont différentes des polyoléfines des poudres des polyoléfines et où
a) dans la première étape de réaction en phase solide, on effectue une conversion des mélanges des poudres des polyoléfines et des granulés des polyoléfines à une température de réaction inférieure de 100 °C à 40 °C à la température de fusion ou à la température de ramollissement des polyoléfines, avec 5 à 30 % en poids (par rapport aux polyoléfines mises en oeuvre) d'acide acrylique, d'acrylonitrile, d'alkyle ester en C₁ - C₁₈ de l'acide acrylique, d'acide méthacrylique, de méthacrylonitrile, d'alkyle ester en C₁ - C₁₈ de l'acide méthacrylique, de styrène, de monoalkyl(C₁ - C₁₂) styrènes ; de dialkyl(C₁ - C₆)styrènes, d'alcoxy(C₁ - C₁₂)styrènes, de monohalogénostyrènes, d'alkyle esters en C₁ - C₁₁ de l'acide styrène carboxylique et / ou d'anhydrides d'acides dicarboxyliques insaturés en C₄ - C₂₁, en présence de 0,05 à 0,85 % en poids (par rapport aux polyoléfines mises en oeuvre) d'acyle peroxydes, d'alkyle peroxydes, d'hydroperoxydes, de peroxycarbonates et / ou de peresters.
b) dans la second étape de réaction en phase solide à des températures de réaction inférieures par 60 °C à 20 °C à la température de fusion ou à la température de ramollissement des polyoléfines, on effectue une conversion des polyoléfines modifiées en a) avec 0,5 à 20 % en poids (par rapport aux polyoléfines mises en oeuvre) d'acrylonitrile, de méthacrylonitrile, d'alkyle ester en C₁ - C₁₈ de l'acide méthacrylique, de styrène, de monoalkyl(C₁ - C₁₂) styrènes ; de dialkyl(C₁ - C₆)-styrènes, d'alcoxy(C₁ - C₁₂)styrènes, de monohalogénostyrènes, d'alkyle esters en C₁ - C₁₁ de l'acide styrène carboxylique, de vinylsilanes en C₅ - C₁₄, d'acrylate silanes en C₆-C₁₅, de vinylpyridine, de vinyloxazoline, d'isopropényloxazoline, de vinylpyrrolidone, d'acrylates d'aminoalkyles en C₁- C₈, de méthacrylates d'aminoalkyles en C₁- C₈, de vinyle éthers en C₃ - C₂₀, d'acrylates d'hydroxyalkyles en C₁ - C₈, de méthacrylates d'hydroxyalkyles en C₁ - C₈ et avec, le cas échéant, de 0,1 à 5 % en poids (par rapport aux polyoléfines mises en oeuvre), de divinylbenzène, d'acrylate d'allyle, de méthacrylate d'allyle, d'esters diacryliques de diols en C₂ - C₈, d'esters diméthacryliques de diols en C₂ - C₇, d'ester acrylique en C₁₂ - C₁₇ de polyols et / ou d'ester méthacrylique en C₁₅- C₂₁ de polyols,
c) dans la troisième étape de réaction, qui est une étape de transition phase solide/phase fondue, on effectue à une température de réaction allant d'une température inférieure de 40 °C à la température de fusion ou à la température de ramollissement des polyoléfines modifiées en a) et ensuite en b), jusqu'à 40 °C au-dessus de la température de fusion ou de la température de ramollissement de ces polyoléfines, avec de 0,1 à 5 % en poids (par rapport aux polyoléfines mises en oeuvre) de monomères insaturés polyfonctionnels du type divinylebenzène, butadiène, isoprène, ester acrylique de diols en C₂ - C₈, ester diméthacrylique de diols en C₂-C₇, ester acrylique en C₁₂- C₁₇ de polyols, ester méthacrylique en C₁₅ - C₂₁ de polyols et / ou (C₉- C₂₂)bismaléimides et
d) dans une étape d'homogénéisation de la masse fondue, on fond et on homogénéise d'une manière connue les polyoléfines modifiées par les trois étapes de réaction a, b et c, le cas échéant en ajoutant de 0,01 à 45 % en poids (par rapport aux polyoléfines mises en oeuvre) d'agents auxiliaires, par une élévation de la température des polyoléfines modifiées à une température supérieure par 15 °C à 130 °C à la température de fusion ou à la température de ramollissement des polyoléfines,
et où, le cas échéant, dans la seconde étape de réaction b) et / ou dans la troisième étape de réaction c) et / ou dans l'étape d'homogénéisation de la masse fondue d), on peut ajouter de 1 à 40 % en poids (par rapport à l'ensemble des polyoléfines mises en oeuvre) d'autres granulés de polymères, choisis parmi les polystyrènes, les copolymères bloc styrène - butadiène - styrène, les copolymères bloc styrene - éthylène - butadiène - styrène, les copolymères bloc styrène - isoprène - styrène, les caoutchoucs éthylène - propylène, les caoutchoucs éthylène - propylène - diène, les polyamides, le polyéthylène téréphtalate, le polybutylène téréphtalate, les polycarbonates, les oxydes de polyphénylènes, les polymères formant des cristaux liquides, les polyéthylène glycols et / ou les polypropylène glycols, ainsi que les oligoéthylène glycols et / ou les oligopropylène glycols.

2. Polyoléfines segmentées selon la revendication 1, **caractérisées en ce que** les polymères de l'éthylène, mis en oeuvre sous la forme de poudres de polyoléfine sont constitués par des polymères de l'éthylène, obtenus en utilisant des catalyseurs du type Ziegler-Natta ou des catalyseurs du type métallocènes.

3. Polyoléfines segmentées selon la revendication 1 ou la revendication 2, **caractérisées en ce que** les granulés de polyoléfines mis en oeuvre sont constitués par des polymères de l'éthylène, obtenus en utilisant des initiateurs radicalaires ou en utilisant des catalyseurs du type Ziegler-Natta ou éventuellement des catalyseurs du type métallocènes.

4. Polyoléfines segmentées selon l'une des revendications 1 à 3, **caractérisées en ce qu'**après les trois étapes de réactions successives, on ajoute comme agents auxiliaires de 0,01 à 2,5 % en poids d'agents stabilisants, de 0,1 à 1 % en poids d'agents antistatiques, de 0,2 à 3 % en poids de pigments, de 0,05 à 1 % en poids d'agents de nucléation, de 0,1 à 3 % en poids de catalyseurs de condensation d'un silanol, de 5 à 40 % en poids d'agents de charge et / ou d'agents de renforcement, de 2 à 20 % en poids d'agents ignifuges et / ou de 0,01 à 1% en poids d'adjuvants de fabrication, ces pourcentages étant exprimés par rapport aux polyoléfines mises en oeuvre.

5. Procédé de fabrication de polyoléfines segmentées, présentant une solidité et une ténacité augmentées, **caractérisé par le fait que** des mélanges de 80 à 99 % en poids de poudres de polyoléfines ayant une granulométrie dans la plage de 0,001 à 2 mm et de 20 à 1 % en poids de granulés de polyoléfines ayant une granulométrie dans la plage de 3 à 6 mm sont soumis, avec des monomères insaturés et dans des mélangeurs continus, à deux étapes de réaction consécutives en phase solide, à une étape de réaction qui est une transition phase solide / phase fondue, ainsi qu'à une étape d'homogénéisation de la masse fondue, où
- les poudres des polyoléfines mises en oeuvre sont constituées par des homopolymères du propylène et / ou des copolymères du propylène et d'α-oléfines ayant de 2 à 18 atomes de carbone, des polymères de l'éthylène, des polymères du butène-1, des polymères du 4-méthylpentène-1, des mélanges des polyoléfines susmentionnées, ainsi que des mélanges de ces poudres de polyoléfines, et
- les granulés des polyoléfines mis en oeuvre sont constitués par des polymères de l'éthylène, des copolymères éthylène - propylène, des copolymères de l'éthylène et d'α-oléfines ayant de 4 à 18 atomes de carbone, des terpolymères éthylène - propylène - diène, des terpolymères éthylène - butadiène - styrène, des copolymères bloc du propylène, des mélanges de ces polyoléfines ou de mélanges de ces granulés de polyoléfines, où les polyoléfines des granulés des polyoléfines sont différentes des polyoléfines des poudres des polyoléfines et où
a) dans la première étape de réaction en phase solide, on effectue une conversion des mélanges des poudres des polyoléfines et des granulés des polyoléfines à une température de réaction inférieure de 100 °C à 40 °C à la température de fusion ou à la température de ramollissement des polyoléfines, avec 5 à 30 % en poids (par rapport aux polyoléfines mises en oeuvre) d'acide acrylique, d'acrylonitrile, d'alkyle ester en C₁ - C₁₈ de l'acide acrylique, d'acide méthacrylique, de méthacrylonitrile, d'alkyle ester en C₁ - C₁₈ de l'acide méthacrylique, de styrène, de monoalkyl-(C₁ - C₁₂)styrènes ; de dialkyl(C₁ - C₆)styrènes, d'alcoxy(C₁ - C₁₂)styrènes, de monohalogénostyrènes, d'alkyle esters en C₁ - C₁₁ de l'acide styrène carboxylique et / ou d'anhydrides d'acides dicarboxyliques insaturés en C₄ - C₂₁, en présence de 0,05 à 0,85 % en poids (par rapport aux polyoléfines mises en oeuvre) d'acyle peroxydes, d'alkyle peroxydes, d'hydroperoxydes, de peroxycarbonates et / ou de peresters.
b) dans la seconde étape de réaction en phase solide à des températures de réaction inférieures par 60 °C à 20 °C à la température de fusion ou à la température de ramollissement des polyoléfines, on effectue une conversion des polyoléfines modifiées en a) avec 0,5 à 20 % en poids (par rapport aux polyoléfines mises en oeuvre) d'acrylonitrile, de méthacrylonitrile, d'alkyle ester en C₁ - C₁₈ de l'acide méthacrylique, de styrène, de monoalkyl(C₁ - C₁₂)styrènes ; de dialkyl(C₁ - C₆)styrènes, d'alcoxy(C₁-C₁₂)styrènes, de monohalogénostyrènes, d'alkyle esters en C₁- C₁₁ de l'acide styrène carboxylique, de vinylsilanes en C₅ - C₁₄, d'acrylate silanes en C₆- C₁₅, de vinylpyridine, de vinyloxazoline, d'isopropényloxazoline, de vinylpyrrolidone, d'acrylates d'aminoalkyles en C₁- C₈, de méthacrylates d'aminoalkyles en C₁- C₈, de vinyle éthers en C₃ - C₂₀, d'acrylates d'hydroxyalkyles en C₁ - C₈, de méthacrylates d'hydroxyalkyles en C₁ - C₈ et avec, le cas échéant, de 0,1 à 5 % en poids (par rapport aux polyoléfines mises en oeuvre), de divinylbenzène, d'acrylate d'allyle, de méthacrylate d'allyle, d'esters acryliques de diols en C₂- C₈, d'esters diméthacryliques de diols en C₂ - C₇, d'ester acrylique en C₁₂ - C₁₇ de polyols et / ou d'ester méthacrylique en C₁₅- C₂₁ de polyols,
c) dans la troisième étape de réaction, qui est une étape de transition phase solide/phase fondue, on effectue à une température de réaction allant d'une température inférieure de 40 °C à la température de fusion ou à la température de ramollissement des polyoléfines modifiées en a) et ensuite en b) jusqu'à 40 °C au-dessus de la température de fusion ou de la température de ramollissement de ces polyoléfines, avec de 0,1 à 5 % en poids (par rapport aux polyoléfines mises en oeuvre) de monomères insaturés polyfonctionnels du type divinylbenzène, butadiène, isoprène, ester acrylique de diols en C₂ - C₈, ester diméthacrylique de diols en C₂ - C₇, ester acrylique en C₁₂ - C₁₇ de polyols, ester méthacrylique en C₁₅ - C₂₁ de polyols et / ou (C₉ - C₂₂)bismaléimides et
d) dans une étape d'homogénéisation de la masse fondue, on fond et on homogénéise pendant une durée de 0,2 à 4 minutes et cela d'une manière connue les polyoléfines modifiées par les trois étapes de réaction a, b et c, le cas échéant en ajoutant de 0,01 à 45 % en poids (par rapport aux polyoléfines mises en oeuvre) d'agents auxiliaires, par une élévation de la température des polyoléfines modifiées à une température supérieure par 15 °C à 130 °C à la température de fusion ou à la température de ramollissement des polyoléfines, on dégaze le cas échéant en ajoutant un moyen d'entraînement et on évacue,
et où, le cas échéant, dans la seconde étape de réaction b) et / ou dans la troisième étape de réaction c) et / ou dans l'étape d'homogénéisation de la masse fondue d), on peut ajouter de 1 à 40 % en poids (par rapport à l'ensemble des polyoléfines mises en oeuvre) d'autres granulés de polymères, choisis parmi les polystyrènes, les copolymères bloc styrène - butadiène - styrène, les copolymères bloc styrène - éthylène - butadiène - styrène, les copolymères bloc styrène - isoprène - styrène, les caoutchoucs éthylène - propylène, les caoutchoucs éthylène - propylène - diène, les polyamides, le polyéthylène téréphtalate, le polybutylène téréphtalate, les polycarbonates, les oxydes de polyphénylènes, les polymères formant des cristaux liquides, les polyéthylène glycols et / ou les polypropylène glycols, ainsi que les oligoéthylène glycols et / ou les oligopropylène glycols.

6. Procédé de fabrication de polyoléfines segmentées selon la revendication 5, **caractérisé en ce que** la conversion des mélanges de poudres de polyoléfines et de granulés de polyoléfines avec les monomères insaturés s'effectue dans un mélangeur en cascade constitué par deux vis fonctionnant en continu et susceptible d'être chauffé, pour assurer l'alimentation en milieux pulvérulents et par une extrudeuse à haute capacité d'homogénéisation, de préférence une extrudeuse à deux vis.

7. Procédé de fabrication de polyoléfines segmentées selon la revendication 5, **caractérisé en ce que** la conversion des mélanges de poudres de polyoléfines et de granulés de polyoléfines avec des monomères insaturés se fait dans une extrudeuse à cascade avec des cellules de mélange couplées ensemble.

8. Procédé de fabrication de polyoléfines segmentées selon une des revendications 5 à 7, **caractérisé en ce que** les agencements de réacteurs dans lesquels s'effectue la conversion des mélanges des poudres des polyoléfines et des granulés des polyoléfines avec des monomères insaturés, sont équipés avec des agencements de mélangeurs à hélice pour homogénéiser efficacement les mélanges réactionnels avant l'évacuation de ces mélanges réactionnels vers l'agencement de réacteur assurant l'étape réactionnelle b, l'étape réactionnelle c ou l'étape de fusion d.

9. Procédé de fabrication de polyoléfines segmentées selon une ou plusieurs des revendications 5 à 8, **caractérisé en ce que** les agencements de réacteurs servant aux étapes réactionnelles b ) et / ou c) et / ou l'agencement de réacteur servant à la fusion d) sont pourvus d'installations permettant une alimentation dosée en granulés de polymères et / ou en un milieu à haute viscosité.

10. Utilisation de polyoléfines segmentées selon une ou plusieurs des revendications 1 à 4, le cas échéant en mélange avec des polyoléfines conventionnelles, pour la fabrication de feuilles, de filaments, de plaques, de revêtements, de tubes, de corps creux et d'articles en mousse.
